# EUROPÄISCHE PATENTSCHRIFT

(11) **EP 0 399 008 B1**
(45) Veröffentlichungstag und Bekanntmachung des Hinweises auf die Patenterteilung: **14.09.1994**
(21) Anmeldenummer: 89911753.5
(22) Anmeldetag: 30.10.1989
(51) Int. Cl.: H01R 39/58, B60L 5/38

(54) **ÜBERWACHUNGSVORRICHTUNG FÜR MINDESTENS EINEN STROMABNEMNER EINES FÖRDERWAGENS EINER SCHIENENGEBUNDENEN FÖRDERANLAGE**
A MONITORING DEVICE FOR AT LEAST ONE CURRENT PICK-UP OF A TRANSPORT TRUCK OF A RAIL-BORNE CONVEYOR
DISPOSITIF DE CONTROLE POUR AU MOINS UN FROTTEUR DE CONTACT D'UN WAGONNET TRANSPORTEUR D'UNE INSTALLATION TRANSPORTEUSE SUR RAILS

(30) Priorität: 30.11.1988 CH 4459/88
(43) Veröffentlichungstag der Anmeldung: 28.11.1990
(73) Patentinhaber: Büro Patent AG, CH-8750 Glarus (CH)
(72) Erfinder: PIRCHER, Herbert, D-8033 Planegg (DE)
(74) Vertreter: Schmauder, Klaus Dieter
(86) Internationale Anmeldenummer: CH8900186
(87) Internationale Veröffentlichungsnummer: WO9006607

(56) Entgegenhaltungen:
- DE-A- 3 510 453
- DE-U- 8 211 804
- Patent Abstracts of Japan, vol. 10, No. 46 (E-383)(2103) 22 February 1986 & JP-A-60 200744

## Beschreibung

Die Erfindung betrifft eine schienengebundene Förderanlage gemäss Oberbegriff des Anspruches 1.

Eine Förderanlage der eingangs genannten Art ist aus der DE-U-82 11 804 bekannt. Unterhalb mehrerer paralleler Schleifleitungen ist eine quer verlaufende Welle angeordnet, die für jede Schleifleitung einen Mitnehmer aufweist, der jeweils bei abgenutztem Stromabnehmer von einem diesem zugeordneten Anschlag betätigt wird. An der Welle ist eine Nockenscheibe befestigt, die einen ortsfesten Schalter betätigt. Eine Vorspannfeder dient zum Zurückstellen der Welle mit den Mitnehmern und der Nockenscheibe in die Überwachungsstellung. Nachteilig ist es, dass diese mechanische Überwachungsvorrichtung einerseits relativ kompliziert aufgebaut ist und andererseits ungenau arbeitet, besonders wenn, wie bei Schleifkontakten die Höhendifferenz zwischen neu und abgenutzt relativ gering ist. Darüberhinaus muss damit gerechnet werden, dass durch Toleranzen des Förderwagens im Fahrprofil, besonders unter Last, ein solcher mechanischer Kontakt mal zu früh, mal zu spät betätigt wird und dadurch eine sichere Überwachung des Zustandes der Stromabnehmer nicht gewährleistet ist.

Die DE-A-31 47 453 beschreibt eine Förderanlage bei der für jeden Stromabnehmer an einem Fahrzeug eine Lichtschranke vorhanden ist, die längs einer im Abstand von der Kontaktfläche vorgegebenen Abriebgrenze des Schleifelementes angeordnet ist. Die Zerstörung der Lichtschranke bei Erreichen der vorgegebenen Abreibgrenze erzeugt im Fahrstand des Fahrzeuges ein Warnsignal. Eine solche Überwachungsvorrichtung ist für die stationäre Anordnung an der Förderstrecke zur Überwachung der Schleifkontakte einer Vielzahl von Förderwagen völlig ungeeignet.

Aufgabe der Erfindung ist es, die Förderanlage der eingangs genannten Art zu verbessern.

Diese Aufgabe wird erfindungsgemäss durch die kennzeichnenden Merkmale des Anspruches 1 gelöst.

Die Prüfsignalschranke, die auf zwei Signale für einen einwandfreien Stromabnehmer und auf ein Signal für ungenügende Stromabnehmer anspricht, gewährleistet eine einfache und sichere Überwachung mittels einer einzigen Überwachungsvorrichtung für eine Vielzahl von Förderwagen auch bei wechselnden Geschwindigkeiten und Lasten der Förderwagen. Ausserdem werden die bei mechanischen Einrichtungen durch Verschleiss und dergleichen bedingten üblichen Fehlerquellen ausgeschaltet.

Vorteilhafte Ausgestaltungen der Überwachungsvorrichtung sind in den Ansprüchen 2 bis 4 beschrieben.

Die Prüfsignale können verschiedener Art sein, besonders einfach ist eine Ausbildung nach Anspruch 2. Dabei ist es besonders vorteilhaft, wenn eine solche Lichtschranke nach Anspruch 3 ausgestaltet ist, da diese eine besonders kleine Bauweise ermöglicht, die sich insbesondere auch nachträglich an bestehende Anlagen einbauen lässt.

Die Überwachungsvorrichtung kann für eine einzelne Stromschiene mit zugehörigem Stromabnehmer zum Einsatz kommen, vorteilhafter ist jedoch eine Ausbildung nach Anspruch 4.

Ausführungsbeispiele der erfindungsgemässen Förderanlage werden nachfolgend anhand der Zeichnungen näher beschrieben. Dabei zeigen:
- Figur 1: eine Ueberwachungsvorrichtung an der Schiene einer Förderanlage in Ansicht parallel zur Schienenrichtung und teilweise geschnitten; und
- Figur 2: den Stromabnehmer der Figur 1 an der Ueberwachungsvorrichtung in Ansicht quer zur Stromschienenrichtung.

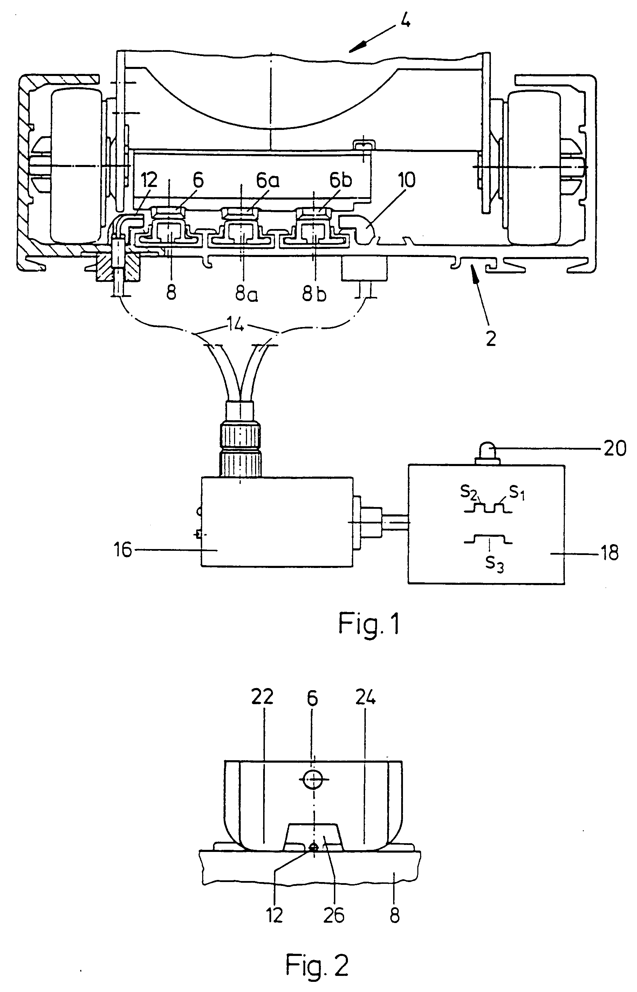

Die in den Figuren 1 und 2 dargestellte Ueberwachungsvorrichtung ist an einer Schiene 2 einer schienengebundenen Förderanlage angeordnet, auf der ein Förderwagen 4 fährt, der mittels Stromabnehmer 6,6a,6b mit entsprechenden Stromschienen 8,8a,8b der Schiene 2 in Verbindung steht. Die Ueberwachungsvorrichtung weist an einer Seite der Stromschienen einen Sender 10 zur Aussendung eines Prüfsignals auf, das von einem auf der anderen Seite der Stromschienen angeordneten Empfänger 12 empfangen wird. Der Sender 10 und der Empfänger 12 sind als Lichtschranke ausgebildet, die den Bereich unmittelbar über den Stromschienen 8,8a,8b abtasten und auf vorübergleitende Stromabnehmer 6,6a,6b ansprechen. Der Sender 10 und der Empfänger 12 werden gebildet durch Lichtleiter 14, die mit einem entsprechenden Gerät 16 in Verbindung stehen, welches in nicht näher dargestellter Weise eine Lichtquelle, einen photoelektrischen Sensor und einen Verstärker enthält. Dieses Gerät ist mit einer Auswertvorrichtung 18 zum Auswerten der empfangenen Signale ausgestattet, welche bei Erreichen einer vorbestimmten Abnutzung der Stromabnehmer ein Alarmsignal auslöst, das beispielsweise eine Alarmlampe 20 oder einen akustischen Signalgeber oder eine weitere Steuereinrichtung der Förderanlage betätigt, welche ein Aussondern des beanstandeten Förderwagens, beispielsweise das Umcodieren des Zielcodes für eine Servicestation veranlassen kann.

Das gezeigte Ausführungsbeispiel der Ueberwachungsvorrichtung spricht auf eine geänderte Formgebung des Stromabnehmers in Fahrtrichtung an. Im gezeigten Beispiel bestehen die Stromabnehmer aus Doppelpunkt-Stromabnehmer, welche zwei Höcker 22, 24 und eine dazwischenliegende Aussparung 26 aufweisen, wie insbesondere aus Figur 2 hervorgeht. Bei intakt befindlichem Stromabnehmer erzeugt dieser beim Vorbeigang an der Ueberwachungsvorrichtung zwei Signale S₁ und S₂ von kurzer Dauer. Ein vorbestimmter Abnutzungszustand der Stromabnehmer 6,6a,6b ist dann gegeben, wenn die Höcker 22,24 soweit abgenutzt sind, dass die Aussparung 26 verschwindet, wodurch an der Ueberwachungsvorrichtung ein Einzelsignal S₃ erzeugt wird, das mindestens doppelt so lang ist wie die Signale S₁ und S₂. Bei Auftreten des Signals S₃ wird an der Auswertvorrichtung 18 ein entsprechendes Alarmsignal der genannten Art ausgelöst.

Im Gegensatz zur dargestellten Ausführungsvariante ist es auch möglich, die Stromabnehmer in nicht näher dargestellter Weise in Fahrtrichtung gesehen konisch oder stufenförmig auszubilden, sodass der Stromabnehmer bei Erreichen eines bestimmten Abnutzungszustandes ebenfalls ein Signal erzeugt, das länger oder kürzer ist als ein Signal, welches den intakten Stromabnehmer kennzeichnet.

### BEZUGSZEICHENLISTE

- S₁: Signal
- S₂: Signal
- S₃: Signal
- 2: Schiene
- 4: Förderwagen
- 6: Stromabnehmer
- 6a: Stromabnehmer
- 6b: Stromabnehmer
- 8: Stromschiene
- 8a: Stromschiene
- 8b: Stromschiene
- 10: Sender
- 12: Empfänger
- 14: Lichtleiter
- 16: Gerät
- 18: Auswertvorrichtung
- 20: Alarmlampe
- 22: Höcker
- 24: Höcker
- 26: Aussparung

## Patentansprüche

1. Schienengebundene Förderanlage mit längs des Streckenverlaufs angeordneten Stromschienen und mit einer Überwachungsvorrichtung für mindestens einen Stromabnehmer (6,6a,6b) eines Förderwagens (4), wobei der Stromabnehmer in Laufrichtung im abgenutzten Zustand eine vom nichtabgenutzten Zustand abweichendes Verschleissmerkmal aufweist und an einer Seite der Stromschiene (8,8a,8b) ein ortsfester Empfänger (12) angeordnet ist, der auf das Verschleissmerkmal des abgenutzten Stromabnehmers anspricht und ein Alarmsignal auslöst, dadurch gekennzeichnet, dass dem Empfänger (12) auf der gegenüberliegenden Seite der Stromschiene (8,8a,8b) ein Sender (10) zum Aussenden eines Prüfsignals zugeordnet ist, und der Stromabnehmer (6,6a,6b) als Doppelpunkt-Stromabnehmer ausgebildet ist, der im abgenutzten Zustand ein Einpunkt-Stromabnehmer ist, wobei ein Auswertgerät auf paarweise Signale (S₁,S₂) des Doppelpunkt-Stromabnehmers nicht anspricht, jedoch auf Einzelsignale (S₃), vorzugsweise von der Länge der paarweisen Signale (S₁+S₂), des Einpunkt-Stromabnehmers und das Alarmsignal auslöst.

2. Förderanlage nach Anspruch 1, dadurch gekennzeichnet, dass der Sender (10) und der Empfänger (12) als Lichtschranke ausgebildet sind.

3. Förderanlage nach Anspruch 2, dadurch gekennzeichnet, dass der Lichtsender (10) und der Lichtempfänger (12) jeweils über Lichtleiter (14) der Stromschiene (8,8a,8b) zugeordnet sind.

4. Förderanlage nach einem der Ansprüche 1 bis 3, dadurch gekennzeichnet, dass zwischen dem Empfänger (12) und dem Sender (10) mindestens zwei Stromschienen (8,8a,8b) angeordnet sind.

## Claims

1. Rail-bound conveyor apparatus comprising current bars arranged longitudinally along the line path and a monitoring device for at least one current collector (6,6a,6b) of a conveyor car (4), the current collector, when in the worn state, having in the direction of travel a wear feature which is different from that of the non-worn state, and a fixed receiver (12) arranged at one side of the current bar (8,8a,8b) which responds to the wear feature of the worn current collector and triggers off a warning signal, characterised in that, in order to send out a test signal, a transmitter (10) is associated with the receiver (12) at the opposite side of the current bar (8,8a,8b), and that the current collector (6,6a,6b) is in the form of a double point current collector, which in the worn state, is a single point current collector, whereby an evaluation device does not respond to a pair of signals (S₁,S₂) of the double point current collector, but to single signals (S₃), preferably of the length of the pair of signals (S₁+S₂), of the signal point current collector, and triggering off the warning signal.

2. A conveyor apparatus according to claim 1, characterised in that the transmitter (10) and the receiver (12) are in the form of a light barrier.

3. A conveyor apparatus according to claim 2, characterised in that the light transmitter (10) and the light receiver (12) are each associated with the current bar (8,8a,8b) via light conductors (14).

4. A conveyor apparatus according to one of claims 1 to 3, characterised in that at least two current bars (8,8a,8b) are arranged between the receiver (12) and the transmitter (10).

## Revendications

1. Installation de transport sur rail avec des rails conducteurs disposés le long du trajet et avec un dispositif de contrôle (6, 6a, 6b) d'un wagonnet de transport (4), dans laquelle le frotteur de contact présente dans le sens de la marche quand il est usé une caractéristique d'usure qui s'écarte de son état non usé et dans laquelle un récepteur à poste fixe (12) est disposé sur un côté des rails conducteurs (8, 8a, 8b), récepteur qui réagit à la caractéristique d'usure du frotteur de contact usagé et déclenche un signal d'alarme, caractérisée en ce que l'on associe au récepteur (12) sur le côté opposé des rails conducteurs (8, 8a, 8b) un émetteur (10) pour émettre un signal de contrôle, et en ce que le frotteur de contact (6, 6a, 6b) est constitué sous la forme d'un frotteur de contact à double point de contact, qui devient un frotteur de contact à un seul point quand il est usé, un appareil d'exploitation étant prévu qui ne réagit pas à des signaux (S₁, S₂) du frotteur de contact à double point se produisant par paire, mais réagit par contre à un signal unique (S₃), de préférence ayant la longueur des signaux (S₁ + S₂) fonctionnant par paire, du frotteur de contact à un seul point et déclenchant le signal d'alarme.

2. Installation de transport selon la revendication 1, caractérisée en ce que l'émetteur (10) et le récepteur (12) sont constitués sous la forme de barrage photoélectrique.

3. Installation de transport selon la revendication 2, caractérisée en ce que l'émetteur de lumière (10) et le récepteur de lumière (12) sont respectivement associés par l'intermédiaire de fibres optiques (14) au rail conducteur (8, 8a, 8b).

4. Installation de transport selon l'une des revendications 1 à 3, caractérisée en ce qu'entre le récepteur (12) et l'émetteur (10) sont disposés au moins deux rails conducteurs (8, 8a, 8b).
